# EUROPÄISCHE PATENTSCHRIFT

(11) **EP 1 436 795 B1**
(45) Veröffentlichungstag und Bekanntmachung des Hinweises auf die Patenterteilung: **09.01.2008**
(21) Anmeldenummer: 02772042.4
(22) Anmeldetag: 05.09.2002
(51) Int. Cl.: G08C 19/02

(54) **VERFAHREN ZUR ÜBERTRAGUNG VON DATEN VON WENIGSTENS EINEM SENSOR ZU EINEM STEUERGERÄT**
METHOD FOR TRANSMITTING DATA FROM AT LEAST ONE SENSOR TO A CONTROL DEVICE
PROCEDE DE TRANSMISSION DE DONNEES D'AU MOINS UN CAPTEUR A UN APPAREIL DE COMMANDE

(30) Priorität: 06.10.2001 DE 10149332
(43) Veröffentlichungstag der Anmeldung: 14.07.2004
(73) Patentinhaber: ROBERT BOSCH GMBH, 70442 Stuttgart (DE)
(72) Erfinder: OHL, Christian, 72793 Pfullingen (DE); KOHN, Oliver, 72768 Reutlingen (DE); SCHOMACKER, Jochen, 72762 Reutlingen (DE); ULMER, Michael, 72116 Moessingen (DE)
(86) Internationale Anmeldenummer: PCT/DE2002/003281
(87) Internationale Veröffentlichungsnummer: WO 2003/034368

(56) Entgegenhaltungen:
- DE-A- 4 209 785
- DE-A- 10 114 504
- US-A- 5 166 678

## Beschreibung

### Stand der Technik

Die Erfindung geht aus von einem Verfahren zur Übertragung von Daten von wenigstens einem Sensor zu einem Steuergerät nach der Gattung des unabhängigen Patentanspruchs.

Es ist bereits aus dem Artikel D. Ullmann und andere: "Side Airbag Sensor in Silicon Micromachining" SAE Technical Paper, März 1999 bekannt, von ausgelagerten Sensoren in einem Kraftfahrzeug Daten über eine Zweidrahtleitung zu einem Steuergerät zu übertragen. Dies ist insbesondere für Rückhaltesysteme von Interesse. Dabei werden die Signale über eine Stromamplitudenmodulation erzeugt. Von dem Steuergerät werden die einzelnen Sensoren über diese Zweidrahtleitung auch mit elektrischer Energie durch einen Gleichstrom versorgt. Es liegt damit eine Powerline-Datenübertragung vor. Für die Datenübertragung wird ein 11-Bit Rahmen verwendet, wobei 2 Startbits, 8 Datenbits und 1 Parity-Bit vorgesehen sind. Für die Übertragung wird eine Manchester-Codierung verwendet.

Aus US 5,166,678 A ist ein Prozessregelsystem bekannt, bei dem Instrumente mit einem Regelsystem verbunden sind. Die Kommunikation zwischen den Instrumenten und dem Regelsystem geschieht über eine Powerline-Datenübertragung. Dabei werden FSK-Signale von den Instrumenten zum Regelsystem übertragen. Damit ist ein Master-Slave-System aufgebaut, das eine Datenrahmenstruktur für die Übertragung verwendet.

### Vorteile der Erfindung

Das erfindungsgemäße Verfahren zur Übertragung von Daten von wenigstens einem Sensor zu einem Steuergerät mit den Merkmalen des unabhängigen Patentanspruchs hat demgegenüber den Vorteil, dass durch die feste Zuordnung von Teilen des zur Verfügung stehenden Wertebereichs für die Datenübertragung zu den Sensorwerten, den Status- und Fehlermeldungen und den Sensoridentifikationsdaten eine größere Sicherheit bezüglich der Daten erreicht wird und eine Verwechslung vermieden wird.

Durch die in den abhängigen Ansprüchen aufgeführten Maßnahmen und Weiterbildungen sind vorteilhafte Verbesserungen des im unabhängigen Patentanspruch angegebenen Verfahrens zur Übertragung von Daten von wenigstens einem Sensor zu einem Steuergerät möglich.

Besonders vorteilhaft ist, dass ein Wertebereich von 10 Bit verwendet wird, bei dem der größte Teil für die Sensorwerte verwendet wird und zwei kleinere Teile für die Zustands- und Fehlermeldungen sowie die Sensoridentifikation. Die 10 Bit können vorteilhafterweise symmetrisch angeordnet werden.

Weiterhin ist es von Vorteil, dass ein Sensoridentifikationsdatum, das die Sensornummer angibt, mit einem entsprechenden Identifikationscode zu einem Paar kombiniert wird, dass dieses Paar für eine vorgegebene Anzahl wiederholt gesendet wird, wobei der Identifikationscode für die Datenintegrität der Sensoridentifikation zuständig ist. Damit wird vermieden, dass eine Sensoridentifikation vom Steuergerät nicht gelesen wird, insbesondere wenn das Steuergerät mit einer geringeren Datenrate Daten von der Leitung liest, als der Sensor auf die Leitung gibt. Dabei könnte es unter Umständen vorkommen, dass ein bestimmtes Sensoridentifikationsdatum immer wieder überlesen wird. Durch eine geeignete Wiederholung dieses Sensoridentifikationsdatums, und zwar hintereinander, wird dieser Fall vermieden und das Sensoridentifikationsdatum wird auf jeden Fall von dem Steuergerät gelesen.

Schließlich ist es auch von Vorteil, dass eine Vorrichtung zur Durchführung des erfindungsgemäßen Verfahrens vorliegt, die ein Steuergerät und wenigstens einen Sensor aufweist, sowie die jeweilige Leitung, die den Sensor mit dem Steuergerät verbindet. Weiterhin weist das Steuergerät einen Empfängerbaustein auf, der mit einer geringeren Datenrate Daten von der jeweiligen Leitung liest, als ein Senderbaustein des wenigstens einen Sensors Daten auf der Leitung sendet. Zusätzlich kann noch eine Leitung zur Energieversorgung vorgesehen sein, die neben der Datenübertragungsleitung, die auch zur Energieversorgung des Sensors verwendet wird, den Sensor mit zusätzlicher Energie versorgt, was insbesondere bei Sensoren mit einer Heizung notwendig ist, um hier ausreichend Energie zur Verfügung zu stellen. Auch wenn eine Hochspannung notwendig ist, kann eine solche Leitung von Nutzen sein. Ein erfindungsgemäßer Sensor weist einen Senderbaustein auf, der wie oben angegeben, Daten auf die Leitung gibt. Ein erfindungsgemäßes Steuergerät weist einen Empfängerbaustein auf, der wie oben beschrieben, die Daten entsprechend von der Leitung liest. Als Leitung kann hier eine Zweidrahtleitung oder eine andere Leitung verwendet werden.

### Zeichnung

Ausführungsbeispiele der Erfindung sind in der Zeichnung dargestellt und werden in der nachfolgenden Beschreibung näher erläutert. Es zeigen
Figur 1 ein erstes Blockschaltbild der erfindungsgemäßen Vorrichtung,
Figur 2 ein zweite Blockschaltbild der erfindungsgemäßen Vorrichtung,
Figur 3 die erfindungsgemäße Aufteilung des zur Verfügung stehenden Wertebereichs,
Figur 4 ein Sensoridentifikationsdatum mit seinem Identifikationscode und
Figur 5 ein Flussdiagramm des erfindungsgemäßen Verfahrens.

### Beschreibung des Ausführungsbeispiels

Für Airbag- Satellitensensoren wird eine unidirektionale Zweidrahtstromschnittstelle eingesetzt, um Daten von den Airbag-Satellitensensoren zu einem Steuergerät zu übertragen. Verschiedene Firmen verwenden solch eine Schnittstelle. Um diese Schnittstelle flexibler zu gestalten und eine eindeutige Identifizierung von Sensoren zu ermöglichen, wird erfindungsgemäß das Verfahren zur Übertragung von Daten von wenigstens einem Sensor zu einem Steuergerät dahingehend erweitert, daß der wenigstens eine Sensor nach Erhalt der elektrischen Energie von dem Steuergerät eine Sensoridentifikation zu dem Steuergerät überträgt. Damit wird eine eindeutige Identifikation des jeweiligen Sensors möglich, so daß das Steuergerät dann gemäß diesem Sensor die Sensorendaten verarbeiten kann. Ein Steuergerät kann daher Algorithmen zur Verarbeitung von unterschiedlichen Sensoren aufweisen. Gemäß der Sensoridentifikation wird dann nur der entsprechende Algorithmus verwendet, um die Sensorenwerte von dem jeweiligen Sensor zu verarbeiten.

Diese Sensoridentifikation wird zusätzlich dadurch gesichert, daß den jeweiligen Datenworten Identifikationscodes vorangestellt werden. Durch eine Wiederholung der Sensoridentifikation wird die Wahrscheinlichkeit erhöht, daß das Steuergerät die Sensoridentifikation korrekt erhält. Für die Nutzdaten ist es nun möglich, in verschiedenen logischen Kanälen über eine Zweidrahtleitung, beispielsweise im Zeitmultiplex übertragen zu werden, und es ist weiterhin möglich eine unterschiedliche Übertragungsrate sowie Auflösung für die Sensorenwerte zu verwenden. Dies wird dann in der Sensoridentifikation signalisiert, um die korrekte Verarbeitung zu gewährleisten.

Erfindungsgemäß wird nun ein Verfahren zur Übertragung von Daten von wenigstens einem Sensor zu einem Steuergerät vorgeschlagen, bei dem ein zur Verfügungstehender Wertebereich, aus dem die Daten kodiert werden können, in drei Teile aufgeteilt wird. Ein erster Teil des Wertebereichs steht für die Sensorwerte zur Verfügung. Dieser Bereich ist im allgemeinen der größte. Ein zweiter Teil steht für Status- und Fehlermeldungen zur Verfügung. Hier können Meldungen wie "defekter Sensor" oder "Sensor bereit" empfangen werden. Ein dritter Teil steht für die Sensoridentifikationsdaten zur Verfügung. Die Sensoridentifikationsdaten geben an, welche Seriennummer ein Sensor aufweist, einen dazugehörigen Identifikationscode, der zur Datenintegrität der Seriennummer verwendet wird, und auch Blockidentifikationsnummern, da übertragene Daten zu Blöcken zusammengefasst werden und diese auch eine Identifikation erhalten. Üblicherweise wird ein Wertebereich von 10 Bit verwendet. Dieser Wertebereich ist hier symmetrisch angeordnet. Da üblicherweise der Sensor mit einer höheren Datenrate die Daten überträgt als das Steuergerät die Daten von der Leitung liest, ist es notwendig, Daten zu wiederholen, so dass das Steuergerät alle notwendigen Daten erhält. Dabei wird insbesondere das Sensoridentifikationsdatum mit einem entsprechenden Identifkationscode für eine vorgegebene Anzahl wiederholt gesendet. Typischerweise werden hier sechzehn Wiederholungen direkt hintereinander eingesetzt.

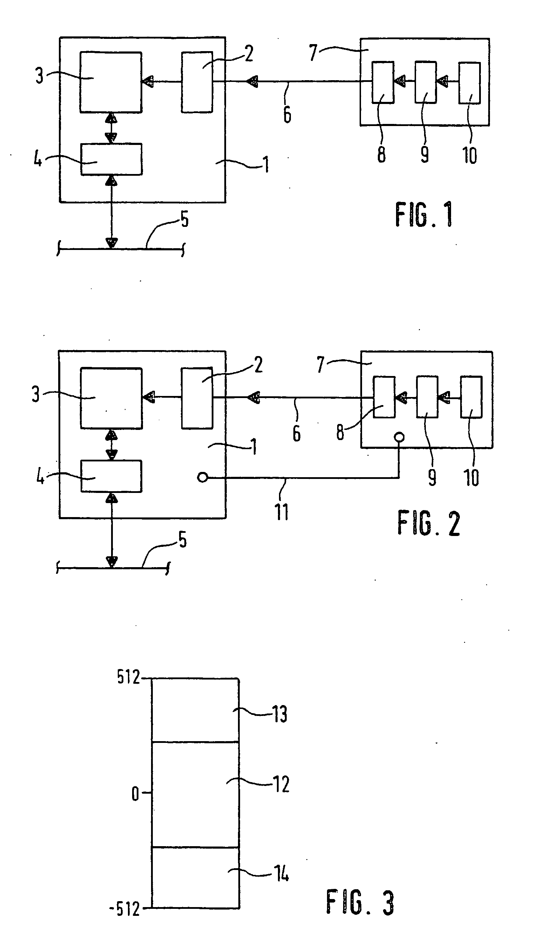

Figur 1 zeigt in einem ersten Blockschaltbild die erfindungsgemäße Vorrichtung. Ein Steuergerät 1 weist einen Empfängerbaustein 2, einen Prozessor 3 und einen Schnittstellenbaustein 4 auf. Der Prozessor 3 ist über einen Dateneingang mit dem Empfängerbaustein 2 verbunden. Der Prozessor 3 ist weiterhin über einen Datenein-/-ausgang mit dem Schnittstellenbaustein 4 verbunden. Der Schnittstellenbaustein 4 ist hier über einen Datenein-/-ausgang mit einem Bus 5 verbunden, der in einem Fahrzeug angeordnet ist. Damit ist dann das Steuergerät mit anderen Funktionseinheiten wie Rückhaltemitteln oder anderen Steuergeräten verbunden. Alternativ ist es hier möglich, anstatt eines Busses auch zwei Drahtleitungen zu verwenden.

Der Empfängerbaustein 2 ist hier über seinen Dateneingang mit einer Leitung 6 verbunden, an die hier beispielhaft ein Sensor 7 angeschlossen ist. Hier handelt es sich um einen Beschleunigungssensor. An die Leitung 6 können auch mehr Sensoren, beispielsweise auch ein Sensorencluster angeschlossen sein. An das Steuergerät 1 können weitere Leitungen mit Sensoren angeschlossen sein. Dabei kann der Empfängerbaustein 2 für nur eine Leitung oder auch für mehrere Leitungen ausgelegt sein. Anstatt eines Beschleunigungssensor können auch andere Sensoren, wie chemische Sensoren oder andere Fahrdynamiksensoren, verwendet werden.

Der Sensor 7 weist einen Senderbaustein 8, ein Sensierungselement 10 und eine Messwertelektronik 9 auf. Das Sensierungelement 10, hier ein Beschleunigungsaufnehmer, ausgeführt in Mikromechanik, ist an die Messwertelektronik 9 angeschlossen, die eine Messwertaufbereitung und-digitalisierung durchführt. Die Messwertelektronik 9 ist an den Senderbaustein 8 angeschlossen, der die Sensordaten über die Leitung 6 überträgt.

Bei der ersten Inbetriebnahme des Sensors 7, der seine Energie über die Leitung 6 erhält und dabei die Übertragung der Daten durch eine Strommodulation des empfangenen Gleichstromes durchführt, wird eine Initialisierungsphase durchgeführt. Zunächst führt das Steuergerät 1 einen Leitungstest der Leitung 6 durch. Nach dem ersten Energieempfang führt der Sensor 7 eine Übertragung von Sensoridentifikationsdaten durch. Der Sensor 7 selbst führt dabei vorher einen Selbsttest durch. Das Steuergerät 1 führt dabei eine Offset-Angleichung durch, die der Sensor 7 nicht durchführt. Nach der Sensoridentifikation überträgt der Sensor 7 auch seinen Zustand, ob er also in Ordnung ist oder einen Fehler aufweist. In dieser Phase führt der Sensor auch eine Offset-Angleichung durch. Nach dieser Initialisierung folgt der Normalbetrieb, in dem auch eine Angleichung des Offsets permanent durchgeführt wird.

Figur 2 zeigt ein zweites Blockschaltbild der erfindungsgemäßen Vorrichtung, wobei hier zusätzlich eine Energieversorgungsleitung 11 vorgesehen ist, die vom Steuergerät 1 zu dem Sensor 7 führt. Bei solchen Sensoren, die beispielsweise eine Heizung benötigen und damit einen besonders hohen Energiebedarf aufweisen, kann es vorkommen, dass die Energieversorgung über die Datenleitung 6 nicht ausreichend ist. In einem solchen Fall muss eine zusätzliche Leitung 11 vorgesehen sein, die den zusätzlichen Energiebedarf des Sensors 7 deckt.

Figur 3 zeigt den Wertebereich von 10 Bit, der zur Datenübertragung über die Leitung 6 zur Verfügung steht. Der Wertebereich ist hier symmetrisch um Null angeordnet, so dass ± 512 die äußeren Grenzen sind. Der größte Wertebereich ± 480 wird für die Sensorwerte verwendet. Dieser Bereich ist hier mit dem Bezugszeichen 12 gekennzeichnet. Mit dem Bezugszeichen 13 ist ein Wertebereich von 481 - 511 vorgesehen, der für Status- und Fehlermeldungen, wie oben dargestellt, zur Verfügung steht. Dieser Bereich ist mit dem Bezugszeichen 13 gekennzeichnet. Mit dem Bezugszeichen 14 ist der letzte Bereich, der dritte Bereich gekennzeichnet, der von -481 bis -512 Werte aufweist. Hier werden die Sensoridentifikationdaten und Identifikationscodes sowie Blockidentifikationen kodiert. Durch die Aufteilung in diese drei Bereiche ist eine größere Sicherheit gegeben, die insbesondere Verwechslungen verhindert.

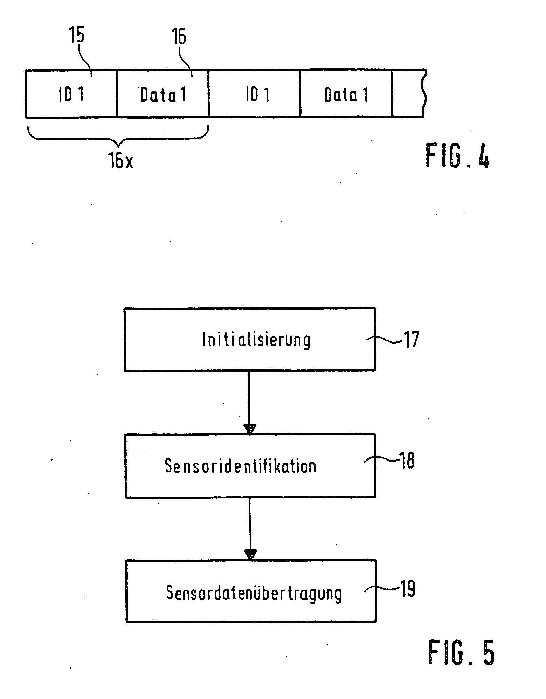

In Figur 4 ist beispielhaft dargestellt, wie eine Sensoridentifikation 16, hier mit dem Begriff Data1 gekennzeichnet, und ein zugehöriger Identifikationscode ID1 mit dem Bezugszeichen 15 zu einem Paar zusammengefasst werden. Dieses Paar wird dann sechzehnmal wiederholt, da wie oben dargestellt, der Empfängerbaustein 2 des Steuergeräts 1 langsamer Daten liest, als der Senderbaustein 8 des Sensors 7 Daten auf die Leitung 6 gibt. Durch die sechzehnfache Wiederholung, die hier nur beispielhaft angegeben ist, wird sichergestellt, dass der Empfängerbaustein 2 dieses Paar ID1 und Data1 auch wirklich liest.

In Figur 5 ist als Flussdiagramm das erfindungsgemäße Verfahren dargestellt. Im Verfahrensschritt 17 erfolgt die Initialisierung der erfindungsgemäßen Vorrichtung. Dabei führt, wie oben dargestellt, zunächst das Steuergerät 1 einen Test der Leitung 6 durch. Dabei wird auch eine Offset-Angleichung durchgeführt. Dann folgt im Verfahrensschritt 18 die Übertragung der Sensoridentifikation, beispielhaft oben dargestellt durch den Identifikationscode 1 und die Sensoridentifikation Data1. Dies wird sechzehnmal, wie oben dargestellt, wiederholt. Dabei werden hier verschiedene Blöcke verwendet, die die sechzehnfachen Wiederholungen der Sensoridentifikation aufweisen. Typischerweise werden sechzehn Blöcke identifiziert. Im Verfahrensschritt 19 folgt schließlich die eigentliche Datenübertragung.

## Patentansprüche

1. Verfahren zur Übertragung von Daten von wenigstens einem Sensor (7) zu einem Steuergerät (1), wobei für jeden Sensor (7) eine jeweilige Leitung (6), insbesondere Zweidrahtleitung, verwendet wird, wobei für die Übertragung der Daten ein vorgegebener Wertebereich zur Verfügung steht, **dadurch gekennzeichnet, dass** ein erster Teil (12) des Wertebereichs für Sensorwerte, ein zweiter Teil (13) für Status- und Fehlermeldungen und ein dritter Teil (14) für Sensoridentifikationsdaten verwendet werden, wobei die drei Teile (12 bis 14) voneinander getrennt sind und aufeinander folgen.

2. Verfahren nach Anspruch 1, **dadurch gekennzeichnet, dass** als Wertebereich 10 Bit verwendet werden.

3. Verfahren nach Anspruch 1 oder 2, **dadurch gekennzeichnet, dass** ein symmetrischer Wertebereich verwendet wird.

4. Verfahren nach einem der Ansprüche 1 bis 3, **dadurch gekennzeichnet, dass** ein jeweiliges Sensoridentifikationdatum (16) mit einem entsprechenden Identifikationscode (15) zu einem Paar kombiniert wird, und dass dieses Paar für eine vorgegebene Anzahl wiederholt gesendet wird, wobei der Identifikationscode (15) für eine Datenintegrität der Sensoridentifikation (16) sorgt.

5. Verfahren nach Anspruch 4, **dadurch gekennzeichnet, dass** der wenigstens eine Sensor (7) mit einer höheren Datenrate sendet, als das Steuergerät (1) Daten liest.

6. Vorrichtung zur Durchführung des Verfahrens nach einem der Ansprüche 1 bis 5, **dadurch gekennzeichnet, dass** die Vorrichtung ein Steuergerät (1), wenigstens einen Sensor (7) und eine jeweilige Leitung (6) aufweist und dass ein Empfängerbaustein (2) vorhanden ist, der Mittel zum Lesen von Daten von der jeweiligen Leitung (6) aufweist, wobei eine erste Datenrate für das Lesen geringer ist, als eine zweite Datenrate für ein Senden der Daten, dass der wenigstens eine Sensor (7) Aufteilungsmittel für die Daten aufweist, wobei für die Übertragung der Daten ein vorgegebener Wertebereich zur Verfügung steht, wobei ein erster Teil (12) des Wertebereichs für Sensorwerte, ein zweiter Teil (13) für Status- und Fehlermeldungen und ein dritter Teil (14) für Sensoridentifikationsdaten vorgesehen sind, wobei die drei Teile (12-14) voneinander getrennt sind und aufeinander folgen.

7. Vorrichtung nach Anspruch 6, **dadurch gekennzeichnet, dass** die jeweilige Leitung (6) zur Energieversorgung des wenigstens einen Sensors (7) verwendbar ist, wobei zusätzlich eine Energieversorgungsleitung (11) vorgesehen ist.

8. Sensor zur Durchführung des Verfahrens nach einem der Ansprüche 1-5, **dadurch gekennzeichnet, dass** der Sensor (7) einen Senderbaustein (8), eine Messwertelektronik (9) und ein Sensierungselement (10) aufweist, dass der Sensor (7) Aufteilungsmittel für die Daten aufweist, wobei für die Übertragung der Daten ein vorgegebener Wertebereich zur Verfügung steht, wobei ein erster Teil (12) des Wertebereichs für Sensorwerte, ein zweiter Teil (13) für Status- und Fehlermeldungen und ein dritter Teil (14) für Sensoridentifikationsdaten vorgesehen sind, wobei die drei Teile (12-14) voneinander getrennt sind und aufeinander folgen.

9. Verwendung eines Steuergeräts zur Durchführung des Verfahrens nach einem der Ansprüche 1-5.

## Claims

1. Method for transmitting data from at least one sensor (7) to a control device (1), a respective line (6), in particular a two-wire line, being used for each sensor (7), a predefined range of values being available for transmitting the data, **characterized in that** a first part (12) of the range of values is used for sensor values, a second part (13) is used for status and fault messages and a third part (14) is used for sensor identification data, the three parts (12 to 14) being separate from one another and following one another.

2. Method according to Claim 1, **characterized in that** 10 bits are used as the range of values.

3. Method according to Claim 1 or 2, **characterized in that** a symmetrical range of values is used.

4. Method according to one of Claims 1 to 3, **characterized in that** a respective sensor identification data item (16) is combined with a corresponding identification code (15) to form a pair, and **in that** this pair is repeatedly transmitted for a predefined number, the identification code (15) ensuring data integrity of the sensor identification (16).

5. Method according to Claim 4, **characterized in that** the at least one sensor (7) transmits at a higher data rate than that at which the control device (1) reads data.

6. Apparatus for carrying out the method according to one of Claims 1 to 5, **characterized in that** the apparatus has a control device (1), at least one sensor (7) and a respective line (6), and **in that** provision is made of a receiver module (2) having means for reading data from the respective line (6), a first data rate for reading the data being lower than a second data rate for transmitting the data, **in that** the at least one sensor (7) has subdividing means for the data, a predefined range of values being available for transmitting the data, a first part (12) of the range of values being provided for sensor values, a second part (13) being provided for status and fault messages and a third part (14) being provided for sensor identification data, the three parts (12-14) being separate from one another and following one another.

7. Apparatus according to Claim 6, **characterized in that** the respective line (6) can be used to supply power to the at least one sensor (7), a power supply line (11) additionally being provided.

8. Sensor for carrying out the method according to one of Claims 1-5, **characterized in that** the sensor (7) has a transmitter module (8), measured value electronics (9) and a sensing element (10), **in that** the sensor (7) has subdividing means for the data, a predefined range of values being available for transmitting the data, a first part (12) of the range of values being provided for sensor values, a second part (13) being provided for status and fault messages and a third part (14) being provided for sensor identification data, the three parts (12-14) being separate from one another and following one another.

9. Use of a control device for carrying out the method according to one of Claims 1-5.

## Revendications

1. Procédé de transmission de données d'au moins un capteur (7) vers un appareil de commande (1) selon lequel
on utilise une ligne (6) respective, notamment une ligne à deux fils pour chaque capteur (7),
et pour la transmission des données, on dispose d'une plage de valeurs prédéfinie,
**caractérisé en ce qu'**
on utilise une première partie (12) de la plage des valeurs ou les valeurs du capteur ou une seconde partie (13) pour les messages d'état et d'erreur et une troisième partie (14) pour les données d'identification de capteur,
les trois parties (12-14) étant séparée les unes des autres et se suivant.

2. Procédé selon la revendication 1,
**caractérisé en ce qu'**
on utilise comme plage de valeurs à 10 bits.

3. Procédé selon la revendication 1 ou 2,
**caractérisé en ce qu'**
on utilise une plage de valeurs, symétrique.

4. Procédé selon l'une des revendications 1 à 3,
**caractérisé en ce qu'**
on combine une donnée d'identification de capteur (16) respective à un code d'identification correspondant (15) pour former une paire et
on émet cette paire de manière répétée, un nombre prédéfini de fois,
le code d'identification (15), assurant l'intégrité des données d'identification de capteur (16).

5. Procédé selon la revendication 4,
**caractérisé en ce qu'**
au moins un capteur (7) émet avec un débit de données plus élevé que la vitesse de lecture des données par l'appareil de commande (1).

6. Dispositif pour la mise en oeuvre du procédé selon l'une des revendications 1 à 5,
**caractérisé en ce qu'**
il comporte un appareil de commande (1) avec au moins un capteur (7) et une ligne respective (6) et
il y a un composant de réception (2) muni de moyens de lecture de données de la ligne respective (6),
un premier débit de données pour la lecture étant inférieur à un second débit de données pour l'émission des données,
au moins un capteur (7) comporte des moyens de répartition des données,
pour la transmission des données, on dispose d'une plage de valeurs prédéfinie,
une première partie (12) de la plage des valeurs correspondant aux valeurs du capteur, une seconde partie (13) correspondant aux messages d'état et d'erreur et une troisième partie (14) correspondant aux données d'identification de capteur,
les trois parties (12-14) étant séparées les unes des autres et se suivant.

7. Dispositif selon la revendication 6,
**caractérisé en ce que**
la ligne respective (6) est utilisée pour l'alimentation en énergie d'au moins un capteur (7) et en plus il est prévu une ligne d'alimentation en énergie (11).

8. Capteur pour la mise en oeuvre du procédé selon l'une des revendications 1 à 5,
**caractérisé en ce que**
le capteur (7) comporte un composant émetteur (8), une électronique de valeur de mesure (9) et un élément de détection (10),
le capteur (7) ayant des moyens de répartition des données,
et pour la transmission des données, il est prévu une plage prédéfinie de valeurs,
une première partie (12) de la plage de valeurs étant réservée aux valeurs de capteur, une seconde partie (13) étant réservée aux messages d'état et d'erreur et une troisième partie (14) étant réservée aux données d'identification de capteur, les trois parties (12-14) étant séparées l'une de l'autre et se suivant.

9. Utilisation d'un appareil de commande pour la mise en oeuvre du procédé selon l'une des revendications 1 à 5.
